(19) Europäisches Patentamt
European Patent Office
Office européen des brevets

(11) **EP 3 226 996 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(21) Anmeldenummer: **15775084.5**

(22) Anmeldetag: **27.08.2015**

(51) Int Cl.:
*B01D 35/16* *(2006.01)*  *B01D 29/35* *(2006.01)*
*B01D 29/48* *(2006.01)*  *B01D 29/66* *(2006.01)*
*B01D 29/90* *(2006.01)*

(86) Internationale Anmeldenummer:
**PCT/EP2015/001746**

(87) Internationale Veröffentlichungsnummer:
**WO 2016/087011 (09.06.2016 Gazette 2016/23)**

(54) **FILTERVORRICHTUNG, HYDRAULIKSYSTEM UND RÜCKSPÜLVERFAHREN**

FILTER DEVICE, HYDRAULIC SYSTEM AND BACKWASHING METHOD

DISPOSITIF DE FILTRATION, SYSTÈME HYDRAULIQUE ET PROCÉDÉ DE LAVAGE À CONTRE-COURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2014 DE 102014017860**

(43) Veröffentlichungstag der Anmeldung:
**11.10.2017 Patentblatt 2017/41**

(73) Patentinhaber: **Hydac Process Technology GmbH 66538 Neunkirchen (DE)**

(72) Erfinder:
• **OLSCHOK, Markus 66540 Neunkirchen (DE)**
• **SCHINDLER, Christian 66280 Sulzbach (DE)**
• **LAHBIB, Seddik 57600 Forbach (FR)**

(74) Vertreter: **Bartels und Partner, Patentanwälte Lange Strasse 51 70174 Stuttgart (DE)**

(56) Entgegenhaltungen:
DE-A1- 2 754 594    DE-A1- 3 247 440
DE-A1-102007 054 737    FR-A1- 2 513 537

**Beschreibung**

Die Erfindung betrifft eine Filtervorrichtung mit einem Filterelement mit den Merkmalen im Oberbegriff von Anspruch 1. Die Erfindung betrifft ferner ein Hydrauliksystem mit einer solchen Filtervorrichtung und ein Verfahren zum Rückspülen eines Filterelements einer solchen Filtervorrichtung mit den Merkmalen im Oberbegriff von Anspruch 11.

Derartige Filtervorrichtungen sind im Stand der Technik beispielsweise durch die WO 2009/062644 A1 bekannt. Bei dieser Filtervorrichtung sind mehrere Filterelemente auf einem Teilkreis versetzt zueinander angeordnet und es ist eine Vorrichtung vorgesehen, um jeweils eines dieser Filterelemente rückzuspülen, während mit den anderen Filterelementen weiter Fluid gefiltert werden kann, das entsprechend die Vorrichtung hierfür durchströmt. Für die Rückspülung wird eine Drucksteuereinrichtung über ein Filterelement und gleichzeitig ein Rückspülarm unter das Filterelement gefahren. Durch Verschließen des Filterelementeinlasses mittels eines Plattenventils der Drucksteuereinrichtung kann ein Rückfluss von Filtrat durch das Filterelement erzeugt werden, der dazu führt, dass Verschmutzungen, die sich am Filterelement angelagert haben, rückgespült und über den Rückspülarm aus der Vorrichtung ausgespült werden können. Trotz der großen Mengen an zu bewegendem Einsatzfluid innerhalb dieser Großvorrichtung für deren vorstehend beschriebenen Betrieb steht jedenfalls auf der Filtratseite des Filterelements stets ein genügend hoher Druck zur Verfügung, um die Rückspülung bewirken zu können. Dieser Rückspül-Effekt wird zusätzlich dadurch verstärkt, dass mit dem Sperrelement der Drucksteuereinrichtung in Form des Plattenventils der Filterelementeinlass schlagartig abgesperrt werden kann, so dass eine Art Druckschlag mit verbesserter Abreinigungswirkung am jeweils rückzuspülenden Filterelement entsteht.

In der Praxis besteht häufig der Wunsch, solche rückspülbaren Filtervorrichtungen nicht nur im Rahmen großer hydraulischer Anlagen, wie beispielsweise Schiffsgetrieben oder hydraulischen Pressen, verbauen zu können, sondern auch für kleinere Maschinen und Maschinenanlagen zu verwenden, beispielsweise im Bereich von Werkzeugmaschinen. Dazu wird ein wesentlich kompakterer Aufbau benötigt, wobei sich aber die Größe der einzusetzenden, wirksamen Filterelementflächen nicht wesentlich reduzieren lässt, weil ansonsten die Partikelverunreinigungen des zu filtrierenden Fluids rasch zu einem Verblocken und damit zu einem vorzeitigen Austausch der Alt- gegen Neu-Filterelemente führen würde, was die Leistungsfähigkeit der Filtervorrichtung beeinträchtigt.

Der Erfindung liegt daher die Aufgabe zugrunde, eine verbesserte Filtervorrichtung und ein Hydrauliksystem aufzuzeigen, die kompakter aufbauen können und die darüber hinaus noch eine verbesserte Rückspülung für das abzureinigende Filterelement ermöglichen. Ferner soll ein effizientes Verfahren zur Rückspülung des Filterelements einer solchen Filtervorrichtung bereitgestellt werden.

Die DE 27 54 594 A1 beschreibt eine gattungsgemäße Filtervorrichtung mit einem Filterelement, das in einem Filtergehäuse mit Fluid-Anschlussstellen für Unfiltrat und Filtrat aufgenommen ist und das für eine Filtration des Unfiltrats oder für eine Rückspülung zum Abreinigen von Partikelverschmutzungen in beiden Richtungen durchströmbar ist, und mit einer Drucksteuereinrichtung, mit der eine Nachsaugwirkung am rückzuspülenden Filterelement zur Verbesserung der Abreinigung von Partikelverschmutzungen erzeugbar ist, wobei die Filtervorrichtung als Ein-Filterelementlösung ausgebildet ist und dass in einem vorgebbaren Wechsel dieses einzige Filterelement zur Filtration einsetzbar oder unter Einsatz der Drucksteuereinrichtung rückspülbar ist, wobei die Fluid-Anschlussstellen für Unfiltrat und Filtrat in einem Kopfteil des Filtergehäuses angeordnet und über das Filterelement miteinander verbunden sind, wobei ein erster fluidführender Weg zwischen der Unfiltrat-Anschlussstelle und einer Eingangsseite des Filterelements von einem verfahrbaren Sperrteil der Drucksteuereinrichtung zumindest teilweise absperrbar ist, und wobei der erste fluidführende Weg im Kopfteil an einer Umlenkung winklig verläuft.

Weitere Filtervorrichtungen gehen aus der DE 10 2007 054 737 A1, der DE 32 47 440 A1 und der FR 2 513 537 hervor.

Der die Filtervorrichtung betreffende Teil der Aufgabe wird durch eine Filtervorrichtung mit den Merkmalen von Anspruch 1 gelöst. Vorteilhafte Ausführungsformen der Filtervorrichtung gehen aus den Ansprüchen 2 bis 9 hervor. Der das Hydrauliksystem betreffende Teil der Aufgabe wird durch ein Hydrauliksystem mit den Merkmalen von Anspruch 10 gelöst. Der verfahrensmäßige Teil der Aufgabe wird durch ein Verfahren zum Rückspülen eines Filterelements einer solchen Filtervorrichtung mit den Schritten gemäß Anspruch 11 gelöst. Eine vorteilhafte Weiterbildung des Verfahrens wird durch Anspruch 12 aufgezeigt.

Gemäß der Lehre des Patentanspruchs 1 ist eine Filtervorrichtung verwirklicht, die dadurch gekennzeichnet ist, dass das Sperrteil an der Umlenkung aus einer freigebenden Offenstellung heraus in Richtung seiner Sperrstellung entlang einer Führung bewegbar ist, welche die Fluid-Anschlussstellen von Unfiltrat und Filtrat voneinander separiert.

Es ist ferner vorgesehen, dass die Filtervorrichtung als Ein-Filterelementlösung ausgebildet ist und dass in einem vorgebbaren Wechsel dieses einzige Filterelement zur Filtration einsetzbar oder unter Einsatz der Drucksteuereinrichtung rückspülbar ist.

Die erfindungsgemäße Filtervorrichtung weist somit nur ein einziges Filterelement innerhalb eines Elementgehäuses auf und ist bereits deshalb sehr bauraumsparend von der Konstruktion her auslegbar. Es ist daher möglich, diese rückspülbare Filtervorrichtung, insbesondere im Bereich von Werkzeugmaschinen, wie Dreh-, Bohr- oder Fräsmaschinen, platzsparend aufzustellen oder einzubauen. Insbesondere die spanabhebende Bearbeitung von Werkstücken bringt regelmäßig eine starke partikuläre Verunreinigung von Schmier-, Kühl- und Hydraulikflüssigkeiten mit sich; diese können jeweils mit der Filtervorrichtung zuverlässig und auch kostengünstig abgereinigt werden, wobei das eingesetzte Filterelement aufgrund von zeit- oder bedarfsgesteuerten Rückspülungen eine besonders lange Standzeit aufweist. Die Abscheiderate ist aufgrund der Verwendung von bewährten, robusten Filterelementtechnologien sehr hoch. Weiterhin ist kein besonders hoher Fluiddruck an der Fluid-Anschlussstelle für das Unfiltrat erforderlich, um das Fluid dennoch zuverlässig filtrieren und eine Rückspülung auslösen zu können.

Im Gegensatz zu der vorstehend beschriebenen, bekannten Lösung ist die maximal mögliche Fluideintragsmenge bei der Ein-Filterelementlösung deutlich reduziert, da eben zwangsläufig nur eine geringere Menge an Fluid zwischen der Außenseite des nur einen Filterelements und der Innenwandung des nur einen Filtergehäuses aufgenommen werden kann, das insoweit das Filterelement mit einem vorgebbaren Wandungsabstand umschließt. Da in der Regel mit dem Filterelement Fluide mit einer relativ hohen Viskosität abgereinigt werden müssen, wie beispielsweise Hydrauliköl, ist es für die Beschleunigung des Fluids bei der Rückspülung von Vorteil, wenn insoweit nur eine geringe Eintragsmenge zur Verfügung steht, die von der Drucksteuereinrichtung entsprechend angesteuert nachgesaugt werden muss. Hierdurch ist erreicht, dass trotz der relativ hohen, einen natürlichen Widerstand bei der Rückspülung bildenden Viskosität des Fluids, die gering gehaltene Eintragsmenge bei der Rückspülung aufgrund der Nachsaugwirkung dennoch eine hohe Rückströmgeschwindigkeit erfährt, die impulsartig und somit hochwirksam eine Abreinigung der partikulären Verschmutzungen von der Filterelementfläche aufseiten des Unfiltratraums des Filterelements erlaubt. Dies hat so keine Entsprechung im Stand der Technik.

Bei der vorgestellten, bekannten Lösung ist die im Filtergehäuse bevorratete Gesamt-Fluideintragsmenge im Hinblick auf die Vielzahl von eingesetzten Filterelementen derart hoch, dass bedingt durch deren Viskosität sich ein sehr großer Strömungswiderstand aufbaut, der erst zu überwinden ist, bevor die mittels der Drucksteuereinrichtung aufzubauende Nachsaugwirkung bei der Rückspülung überhaupt einsetzen kann und aufgrund der Verhaftung der Fluid- oder Ölbestandteile aneinander ist insoweit auch die angestrebte Durchsatzmenge bei der Rückspülung deutlich reduziert, was häufige und länger andauernde Rückspülzyklen notwendig macht, was mit der erfindungsgemäßen Lösung gerade vermieden ist, so dass es dem Grunde nach von der Gesamteffektivität her betrachtet nur eine geringe Rolle spielt, dass mit der erfindungsgemäßen Ein-Elementlösung Filtrations- und Rückspülbetrieb nie gleichzeitig, sondern hintereinander stattzufinden hat.

Es hat sich jedoch gezeigt, dass man durch sinnfällige Verschaltung von mehreren Ein-Filterelementlösungen miteinander diese platzsparend kombinieren kann, um dennoch dergestalt einen kontinuierlichen Filtrationsbetrieb mit einem Teil der Ein-Filterelemente sicherstellen zu können, während der andere Teil der Ein-Filterelemente zusätzlich rückgespült wird, mit deutlich verbesserter Nachsaugwirkung bei der Rückspülung, da trotz der insoweit gestiegenen Gesamt-Fluideintragsmenge für alle zum Einsatz kommenden Ein-Filterelemente diese dennoch in "Kleinpakete" aufgeteilt sind, die sich mit größerer Abreinigungswirkung relativ widerstandsfrei und mithin zeitnah auf die Austragseite des jeweiligen Filterelements für Partikelverschmutzungen bringen lassen. Da man die Ein-Filterelementlösungen an verschiedensten Aufstellorten voneinander räumlich getrennt aber fluidführend miteinander verbunden platzieren kann, lässt sich bauraumsparend die Gesamtleistung einer Einzelvorrichtung mit mehreren Filterelementen, wie sie beispielsweise in der WO 2009/062644 A1 aufgezeigt ist, ohne Weiteres durch die Ein-Elementlösung gleichfalls realisieren, was für einen Durchschnittsfachmann auf dem Gebiet der Filtrationstechnologie überraschend ist.

Besonders vorteilhaft sind die Fluid-Anschlussstellen für Unfiltrat und Filtrat in einem Kopfteil des Filtergehäuses angeordnet und über das Filterelement miteinander verbunden. Ein erster fluidführender Weg zwischen der Unfiltrat-Anschlussstelle und einer Eingangsseite des Filterelements ist von einem verfahrbaren Sperrteil der Drucksteuereinrichtung zumindest teilweise absperrbar. Diese Merkmale erlauben, einen kompakten Aufbau der Filtervorrichtung zu realisieren. Die Absperrung des ersten fluidführenden Weges durch das Sperrteil in mehreren Stufen ermöglicht es, in den einzelnen Stadien des Rückspülvorgangs unterschiedliche Effekte zu erzielen. Beginnt das Sperrteil der Drucksteuereinrichtung von seiner voll geöffneten Stellung in seine Schließstellung zu verfahren, verringert das Sperrteil zunächst den freien Zuflussquerschnitt zum Inneren des Filterelements und das Sperrteil bildet demgemäß mit seinem zugeordneten Ventilsitz am Filtergehäuse eine Art Düse oder Drosselstelle aus, durch welche die Fluidströmung in Richtung der Austragsseite des Filterelements für Partikelverschmutzungen beschleunigt wird. Hierdurch kommt es zu einer in Richtung dieser Austragsseite des Filterelements beschleunigten Axialströmung, und das zumindest teilweise im Inneren des Filterelements vorhandene Unfiltrat reißt die innenwandseitig vorliegende Partikelverschmutzung von den Wänden des Filterelements mit ab. Wird aus einer voll geöffneten Position des Sperrteils heraus oder jedenfalls kurz vor seinem Anliegen an den Ventilsitz das Sperrteil mittels der Drucksteuereinrichtung sehr schnell, vorzugsweise schlagartig geschlossen, kommt es zu einer Art Druckstoß unter Einbeziehung der an das Filterelement austragsseitig angeschlossenen Rückspül- oder Abgabeleitungen, so dass beschleunigt das im Filtratraum des Filtergehäuses abgereinigte Fluid von außen nach innen durch die Wandung des Filterelements tritt und dergestalt die innenseitig am Filterelement eventuell noch verbliebene Partikelverschmutzung dann weiter abreinigt.

Der erste fluidführende Weg kann im Kopfteil an einer Umlenkstelle winklig rechtwinklig verlaufen. Die Führung kann dabei abschnittsweise in der Form einer innerhalb der aufgestellten, betriebsbereiten Vorrichtung vertikal verlaufenden Wand ausgebildet sein. Die rechtwinklige Ausbildung der Umlenkung hat den Vorteil, dass die Drucksteuereinrichtung direkt oberhalb des Filterelements im oder am Kopfteil angeordnet werden kann. Beispielsweise kann das Sperrteil im Kopfteil über eine Betätigungsstange von einem am Kopfteil der Vorrichtung befestigten Aktuator bewegt werden. Des Weiteren ist in jeder Verfahrstellung des Sperrteils durch dessen angesprochene Wandführung sichergestellt, dass auf der Unfiltratseite über die Fluid-Eingangsstelle unter relativ hohem Druck in die Vorrichtung zugeführtes Fluid, das insoweit auf das gegebenenfalls schließende oder öffnende Sperrteil trifft, dessen Funktion respektive die freie Verfahrbewegung des Sperrteils nicht nachteilig beeinflusst ist, insbesondere sichergestellt, dass es zu keiner Hemmung im Rahmen der genannten freien Verfahrbewegung des Sperrteils kommt.

Vorteilhaft erstreckt sich das Filterelement zwischen zwei fluidführenden Aufnahmen innerhalb des Filtergehäuses und geht in diese Aufnahmen über, von denen die eine an den ersten fluidführenden Weg und die andere an einen zweiten fluidführenden Weg in Form einer Rückspülleitung angeschlossen ist, der aus dem Filtergehäuse auf der Austragsseite des Filterelements für die Partikelverschmutzungen herausführt und der von einem Rückspülventil, insbesondere einem 2/2-Wegeventil, ansteuerbar ist. Durch die Aufnahmen ist das Filterelement im Filtergehäuse sicher und druckstabil auch gegenüber Druckwechselbeanspruchungen fixiert und weist definierte Übergangsstellen für die Filtrat-Unfiltratführung auf. Dadurch, dass der zweite fluidführende Weg durch das Rückspülventil absperrbar ist, ist sichergestellt, dass im Filtrationsbetrieb das abzureinigende Fluid von der Unfiltratseite in das Filterelement zur Filtrat- oder Reinseite der Filtervorrichtung gelangt und dass im Rückspülbetrieb das Innere des Filterelements mit der Rückspülleitung fluidführend in Verbindung steht, über die letztendlich die partikuläre abzureinigende Verschmutzung aus der Filtervorrichtung abgeführt wird.

Ein dritter fluidführender Weg verläuft zwischen der Drucksteuereinrichtung und dem Rückspülventil geradlinig, insbesondere entlang einer Längsachse des Filterelements unter Bildung einer Art Freifall-Linie. Ein dahingehend geradliniger Verlauf des dritten fluidführenden Weges ist für die Wirksamkeit der Rückspülung mit von entscheidender Bedeutung, da es bei der Erzeugung der Nachsaugwirkung auf die kinetische Energie der bewegten Fluidmenge im dritten fluidführenden Weg und im sich anschließenden zweiten fluidführenden Weg ankommt. Die zur Verfügung stehende Energie ist dabei durch die Formel

$$W = \frac{m}{2} v^2 \tag{1}$$

bestimmt. Diese besagt, dass je höher die Masse m und die Geschwindigkeit v des strömenden Fluids ist, desto größer ist die zur Verfügung stehende Energie W für die Erzeugung der Nachsaugwirkung und umso besser ist das Rückspülergebnis. Während bei den bekannten Filtervorrichtungen die bewegte Fluidmenge im Bereich des zweiten vergleichbar fluidführenden Weges von einem bezogen auf die Längs- oder Betätigungsachse der Vorrichtung exzentrisch angeordneten Filterelement zu einem demgegenüber zentrisch angeordneten Ventil umgelenkt ist, was mit Energieverlusten einhergeht, steht bei der erfindungsgemäßen Lösung aufgrund des geradlinigen Verlaufs des zweiten und dritten fluidführenden Weges die kinetische Energie des Fluidstroms ungeschmälert zur Erzeugung der Nachsaugwirkung zur Verfügung, wobei zunächst in einem ersten Schritt bei teilgeschlossenem Sperrteil das im Inneren des Filterelements befindliche Fluid regelmäßig in Form von Unfiltrat axial beschleunigt wird und dergestalt parallel zu den Innenwänden des Filterelements verlaufend die Partikelverschmutzung vom Filterelement in Richtung der Austragsseite abträgt. Anschließend erfolgt dann der eigentliche Nachsaugvorgang bei vollständig geschlossenem Sperrteil von gereinigtem Fluid von der Filtratseite des Filterelements auf dessen Unfiltratseite im Inneren, wobei das dergestalt überwiegend radial in das Filterelement eintretende Reinfiltrat eine Abreinigung der Partikelverschmutzung quer zur Längsausrichtung des Filterelements vornimmt. Aufgrund der angesprochenen Freifallwirkung geschieht der dahingehende Abreinigungsvorgang gleichfalls beschleunigt, wobei als verfügbare Rückspülmenge überwiegend die im Filtergehäuse auf dessen Reinseite vorhandene Fluideintragsmenge dient, die auch bei hoher Viskosität dann nahezu widerstandsfrei für den Abreinigungsvorgang von außen nach innen in das Filterelement eintritt.

Besonders vorteilhaft ist es in diesem Zusammenhang, wenn kombiniert das Volumen, das im Inneren des Einzel-Filterelements besteht, mit dem des zweiten fluidführenden Weges in Form der Rückspülleitung derart groß bemessen ist, dass durch das Verfahren des Sperrteils der Drucksteuereinrichtung in die Sperrstellung, nach vorzugsweise raschem Schließen desselben, ein Druckschlag am Filterelement zum Bewirken der Rückspülung erzeugt wird. Dazu können die jeweiligen freien Fluid-Querschnitte A des Filterelements und des zweiten fluidführenden Weges entweder entsprechend groß und/oder deren Länge l ausreichend lang bemessen werden. Aus der allgemein gültigen Formel für strömende Fluide

$$m = \rho V = \rho A l = \rho \int A \, dl \tag{2}$$

ergibt sich, dass bei angenommener gleichbleibender Dichte ρ des innerhalb des Filtergehäuses für die Rückspülung bewegten Fluids mit zunehmenden Volumen V, also abhängig von den Querschnitten A und der Länge l des vom Fluid durchströmten zweiten und dritten fluidführenden We-ges die austragsseitig abzuführende Masse m des Fluids zunimmt. Entsprechend erhöht sich gemäß der Gleichung (1) die für die Rückspülung zur Verfügung stehende Energie W des anzusteuernden Fluids. Das für die Rückspülung zur Verfügung stehende Fluid setzt sich dabei zusammen aus der zunächst im Inneren des Filterelements noch befindlichen Unfiltratmenge aus dem vorangehenden Filtrationsprozess, die bis zum vollständigen Schließen des Sperrteils auf der Zuströmseite der Filtervorrichtung entsprechend nachströmt und der sich anschließenden Kammermenge an Filtrat zwischen der Außenseite des Filterelements und der Innenseite des Filtergehäuses sowie gegebenenfalls einer vorgebbaren Nachströmmenge an Filtrat, das auf der Ausgangs- oder Reinseite der Filtervorrichtung bereits herausgeführt in Richtung des Filtratraums noch nachströmen kann, was auf der genannten Ausgangs- oder Reinseite über eine entsprechende Ventilsteuereinrichtung mit angesteuert werden kann, die vorzugsweise in Wirkverbindung mit der Drucksteuereinrichtung steht.

Sofern das Rückspülventil geöffnet ist und die Rückspülleitung in der Art eines Fallrohres mit entsprechend großer Leitungslänge, vorzugsweise in Vertikalführung, ausgebildet ist, erhöht sich die Nachsaug- oder Druckschlagwirkung beim Rückspülen des Ein-Filterelements weiter; im Gegensatz zur Lösung im Stand der Technik, bei denen Mehrfachumlenkungen in der Rückspül- und Leitungsführung auf der Austragsseite für die Partikelverschmutzung(en) bestehen. Aufgrund der erfindungsgemäßen Fallrohrgestaltung werden die zu bewegenden Fluidmengen bei der Rückspülung schwerkraftbedingt noch stärker beschleunigt, was die Abreinigungsleistung weiter erhöht.

Das Filterelement kann konisch, vorzugsweise in Form eines Spaltsiebrohrs, ausgebildet sein und in einem topfförmig ausgebildeten Aufnahmeteil des Filtergehäuses derart aufgenommen sein, dass sich mit zunehmender Verjüngung des Filterelements der im Aufnahmeteil gebildete, das Filterelement umgebende Filtratraum verbreitert. Auf diese Weise ergeben sich sowohl für die Filtration als auch für die Rückspülung optimale Strömungsverhältnisse, weil sich die Querschnitte im Inneren des Filterelements demgemäß in Richtung auf den zweiten fluidführenden Weg und außerhalb des Filterelements in Richtung auf die Fluid-Anschlussstelle für das Filtrat zunehmend verbreitern.

Vorteilhaft stellt sich durch den angesprochenen konischen Verlauf während der Rückspülung ein iso-kinetischer Strömungsverlauf im Innern des konischen Filterelements in Richtung der Rückspülleitung bei geöffnetem Rückspülventil ein. Dieser iso-kinetische Strömungsverlauf bewirkt, dass über die gesamte Länge des Filterelements eine gleichmäßige Nachsaugwirkung erzeugt wird. Somit wird das Filterelement nicht nur in einem Bereich, beispielsweise am Ende verstärkt rückgespült, sondern über seine gesamte Länge, so dass gleichmäßig die am Filterelement innenseitig angelagerte Partikelverschmutzung ausgetragen respektive ausgeschwemmt wird. Anschließend steht dann die Ein-Elementlösung wieder für die Filtration mit voller Schmutzaufnahmekapazität zur Verfügung, wozu das Rückspülventil zu schließen und das Sperrventil der Drucksteuereinrichtung vorzugsweise bis zu seiner maximal möglichen Öffnungsstellung zu öffnen ist.

Die Drucksteuereinrichtung weist einen Antrieb, vorzugsweise in Form eines pneumatisch ansteuerbaren Arbeitszylinders, auf und das Sperrteil der Drucksteuereinrichtung ist massereduziert platten- oder tellerförmig ausgebildet. Mit einem pneumatisch steuerbaren Arbeitszylinder kann das Sperrteil schnell, um nicht zu sagen von seiner maximalen Öffnungsstellung in seine vollsperrende Schließstellung und umgekehrt schlagartig verfahren werden. Insbesondere, wenn das in die Filtervorrichtung eingesetzte Filterelement aus einem sog. Spaltsiebrohr aus metallisch massiven Werkstoffen besteht, lässt sich so an diesem ein kraftvoller Druckschlag erzeugen, ohne dass das Filterelement durch den Druckschlag beschädigt wird. Durch die angesprochene platten- oder tellerförmige Ausbildung des Sperrteils können darüber hinaus große Querschnitte der fluidführenden Wege im Bereich des Unfiltrateingangs des Filterelements sicher beherrscht werden, und zwar auch dann, wenn auf der Unfiltratseite das Fluid eine starke partikuläre Verschmutzung, auch in Form von Großpartikeln, aufweisen sollte.

Die Erfindung betrifft ferner ein Hydrauliksystem mit einer solchen Filtervorrichtung, wobei an die Fluid-Anschlussstelle der Vorrichtung für das Filtrat ausgansseitig ein Tank angeschlossen ist. Der Tank wirkt dabei als Ausgleichsvorrichtung oder Puffer, um Schwankungen im Fluidstrom nach der Filtervorrichtung aufgrund einer diskontinuierlichen Versorgung mit Filtrat wegen der jeweils notwendigen Rückspülungen auszugleichen. Durch einen in ausreichender Größe dimensionierten Tank ist eine kontinuierliche Versorgung einer in Fluidstromrichtung gesehen nachgeordneten Maschine, die zusammen mit der Filtervorrichtung Bestandteil eines hydraulischen Versorgungskreislaufs ist, mit gefiltertem Fluid sichergestellt.

Die Erfindung betrifft weiterhin ein Verfahren zur Rückspülung eines Filterelements einer solchen Filtervorrichtung mit den Schritten:

a) Öffnen des Rückspülventils zum Freigeben einer fluidführenden Verbindung vom Inneren des Filterelements zur Rückspülleitung;
b) Fließen lassen des Unfiltrats durch das Filterelement und in die Rückspülleitung;
c) Verfahren des Sperrteils der Drucksteuereinrichtung in die Sperrstellung und damit Erzeugen eines Strömungsabrisses des Fluidstroms derart, dass eine Sogwirkung entsteht, die Filtrat aus dem Filtratraum von außen nach innen durch das Filterelement saugt und dabei Verschmutzungen vom Filterelement ablöst;

d) Verfahren des Sperrteils in die Offenstellung zum Spülen des Inneren des Filterelements mit Unfiltrat; und

e) Schließen des Rückspülventils.

Das Sperrteil verbleibt erfindungsgemäß für den Rückspülvorgang maximal 2 Sekunden, bevorzugt maximal 1 Sekunde, weiter bevorzugt maximal 0,5 Sekunden, in der Sperrstellung und fährt dann für den weiteren Filtrationsprozess wiederum in seine maximal geöffnete Stellung zurück.

Die Erfindung ist nachfolgend anhand von einem in den Figuren dargestellten Ausführungsbeispiel näher erläutert. Es zeigen:

Fig. 1     eine perspektivisch gezeichnete Seitenansicht der erfindungsgemäßen Filtervorrichtung;

Fig. 2     einen Querschnitt durch die Filtervorrichtung nach der Fig. 1;

Fig. 3     anhand eines perspektivischen Ausschnitts eines Filterelements eine schematische Verdeutlichung der Wirkung eines Rückspülvorgangs; und

Fig. 4     in einer Prinzipdarstellung der sich im Filterelement ausbildende iso-kinetische Strömungsverlauf beim Rückspülen.

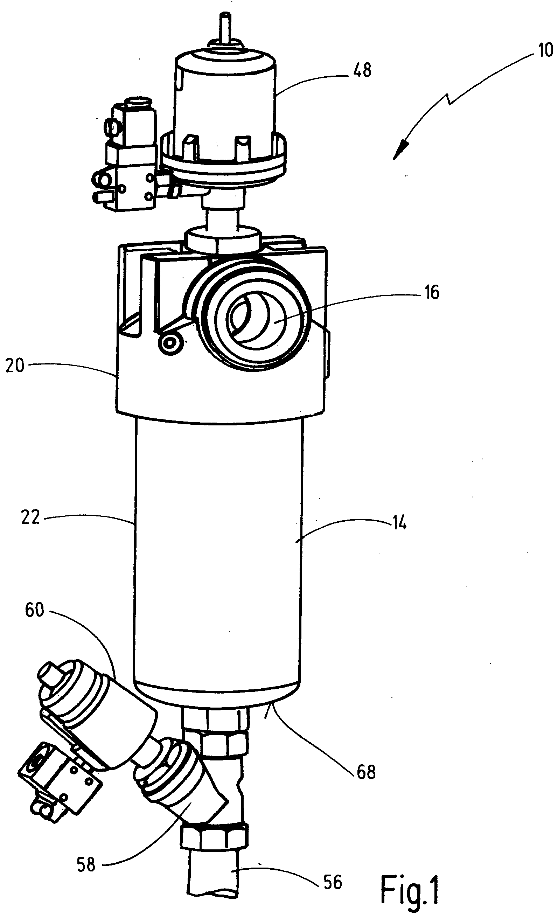

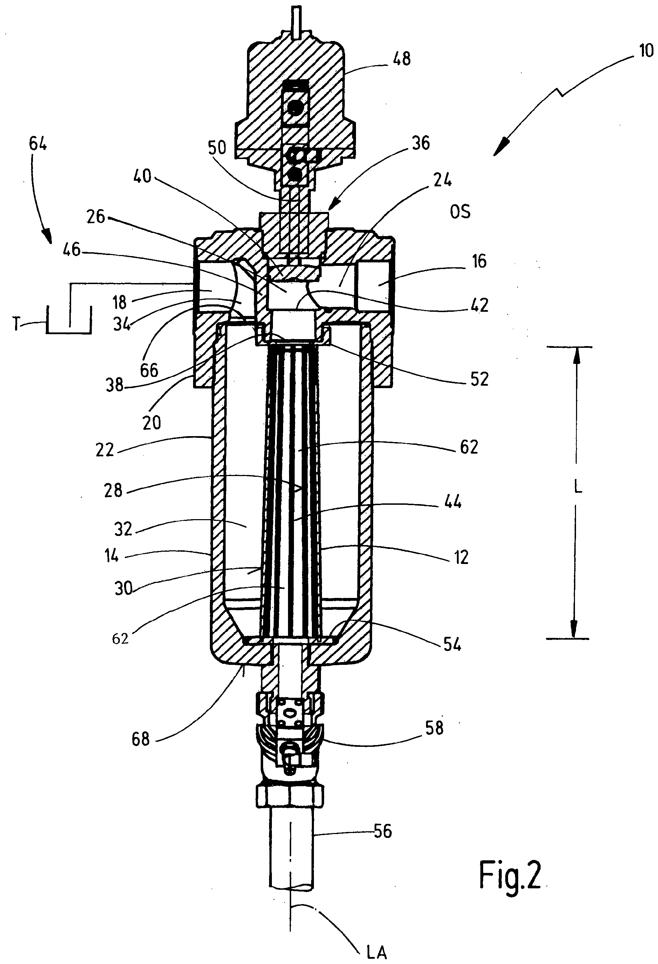

In den Figuren 1 und 2 ist eine erfindungsgemäße Filtervorrichtung 10 mit einem Filterelement 12 gezeigt. Das Filterelement 12 ist in einem Filtergehäuse 14 mit Fluid-Anschlussstellen 16, 18 für Unfiltrat bzw. Filtrat aufgenommen. Die Fluid-Anschlussstellen 16, 18 sind über das Filterelement 12 fluidführend miteinander verbunden. Das Filtergehäuse 14 besteht aus einem Kopfteil 20 und einem topfförmig ausgebildeten Aufnahmeteil 22. Das Kopfteil 20 weist dabei die Fluid-Anschlussstellen 16, 18 für Unfiltrat und Filtrat auf. Von der Fluid-Anschlussstelle 16 für das Unfiltrat wird das Unfiltrat entlang eines ersten fluidführenden Weges 24 in Richtung des Inneren des Filterelements 12 geführt. Dieser erste fluidführende Weg 24 verläuft dabei an einer Umlenkung 26 rechtwinklig. Das Fluid durchströmt dann im Filtrationsbetrieb das Filterelement 12 von innen nach außen, wobei sich Verunreinigungen, insbesondere Partikel, an der Innenseite 28 des Filterelements 12 anlagern. Auf der Außenseite 30 des Filterelements 12 befindet sich der Filtratraum respektive die Filtratseite 32, die über einen weiteren fluidführenden Weg 34 mit der Fluid-Anschlussstelle 18 im Filtergehäuse 14 für die Abfuhr des Filtrats aus der Vorrichtung verbunden ist.

Das Filterelement 12 ist konisch ausgebildet. Insbesondere ist das Filterelement 12 in der Art eines Spaltsiebrohrs ausgebildet, vorzugsweise mit einer Filterfeinheit von 30 $\mu$m bis 3000 $\mu$m. Das Filterelement 12 kann aber auch aus einem mehrlagigen, insbesondere dreilagigen, Drahtgewebe bestehen, das vorzugsweise versintert ist. Ein solches Filterelement 12 weist üblicherweise eine Filterfeinheit von 25 $\mu$m bis 100 $\mu$m auf. Solche Filterelemente 12 sind in der Regel aus Edelstahl hergestellt und deren Einsatz bei solchen Filtrationsaufgaben üblich, so dass auf deren Aufbau nicht mehr im Einzelnen eingegangen wird. Das Filterelement 12 ist in dem topfförmig ausgebildeten Aufnahmeteil 22 des Filtergehäuses 14 derart aufgenommen, dass sich mit zunehmender Verjüngung des Filterelementes 12 der im Aufnahmeteil 22 gebildete, das Filterelement 12 umgebende Filtratraum 32 im Querschnitt in Blickrichtung auf die Fig. 2 gesehen nach oben hin verbreitert.

Erfindungsgemäß ist vorgesehen, dass die Filtervorrichtung 10 als Ein-Filterelementlösung ausgebildet ist und dass in einem vorgebbaren Wechsel in zeitlicher Hintereinanderfolge dieses einzige Filterelement 12 zur Filtration einsetzbar oder unter Einsatz der Drucksteuereinrichtung 36 rückspülbar ist.

In Abhängigkeit der Menge der im Fluid auftretenden, mittels des Filterelements abzureinigenden partikulären Verschmutzungen nimmt der Filtrationsbetrieb aber jedenfalls einen längeren Zeitraum in Anspruch als der jeweilige Rückspülbetrieb. Im Filtrationsbetrieb selbst lagern sich regelmäßig die partikulären Verunreinigungen an der Innenseite 28 des Filterelements 12 an. Diese führen zu einer steigenden Druckdifferenz zwischen den Fluid-Anschlussstellen 16, 18. Eine Rückspülung kann dann bei Überschreiten einer vorbestimmten Druckdifferenz automatisch ausgelöst werden, indem eine nicht näher dargestellte und beschriebene Differenzdruckmesseinrichtung einen solchen Rückspülvorgang auslöst. Darüber hinaus ist es möglich, die Rückspülung zeitgesteuert oder manuell auszulösen. Das Filterelement 12 ist demgemäß für eine Filtration des Unfiltrats oder für eine Rückspülung zum Abreinigen von Partikelverschmutzungen in beiden Richtungen durchströmbar. Ferner weist die Filtervorrichtung 10 eine Drucksteuereinrichtung 36 auf, die den Rückspülvorgang ansteuert und mit der zur Verbesserung der Abreinigung von Partikelverschmutzungen am rückzuspülenden Filterelement 12 eine Nachsaugwirkung erzeugt wird.

Der erste fluidführende Weg 24 ist zwischen der Fluid-Anschlussstelle 16 für Unfiltrat und einer Eingangsseite 38 des Filterelements 12 auf seiner Unfiltratseite mit einem verfahrbaren Sperrteil 40 der Drucksteuereinrichtung 36 teilweise oder voll absperrbar. In einer teilweise abgesperrten Stellung bildet das Sperrteil 40 mit seinem Ventilsitz 42 eine Art Düse oder Drosselstelle aus, durch welche die Fluidströmung des Unfiltrats in Richtung des Zentrums 44 des Filterelements 12 und darüber hinaus in Blickrichtung auf die Fig. 2 gesehen nach unten hin weiter beschleunigt wird, wozu der nach unten hin sich verbreiternde Austragkonus des Filterelements 12 mit beiträgt. Das Sperrteil 40 ist platten- oder tellerförmig ausgebildet, um einen möglichst großen Öffnungsquerschnitt auf der Eingangsseite 38 des Filterelements 12 abdecken zu können. Das Sperrteil 40 ist an der Umlenkung 26 aus einer freigebenden Offenstellung OS heraus in Richtung seiner Sperrstellung entlang einer Führung 46 in Form einer vertikal ausgerichteten Wand bewegbar. Diese Führung 46 separiert die Fluid-Anschlussstellen 16, 18 für Unfiltrat und Filtrat auf der Kopfseite des Filtergehäuses 14 voneinander. Das Sperrteil 40 ist von einem auf der Oberseite des Kopfteils 20 montierten, pneumatisch ansteuerbaren Arbeitszylinder 48 und über eine axial verfahrbare Kolben- oder Betätigungsstange 50 zwischen seiner Ausgangsstellung oder Offenstellung OS und seinen teilweise oder voll abgesperrten Stellungen bewegbar, wobei in der Fig. 2 die voll geöffnete Sperrteilstellung wiedergegeben ist.

Das Filterelement 12 erstreckt sich zwischen zwei fluidführenden Aufnahmen 52, 54 innerhalb des Filtergehäuses 14 und ist druckdicht mit diesen an den jeweiligen Aufnahmestellen verbunden. Eine Aufnahme 52 ist an den ersten fluidführenden Weg 24 und die andere an einen zweiten fluidführenden Weg 56 in Form einer Rückspülleitung angeschlossen, die aus dem Filtergehäuse 14 herausgeführt ist und die von einem Rückspülventil 58, insbesondere einem 2/2-Wegeventil, über einen pneumatisch betätigbaren Arbeitszylinder 60 ansteuerbar ist. Ein dritter fluidführender Weg 62 verläuft geradlinig zwischen der Drucksteuereinrichtung 36 und dem Rückspülventil 58, insbesondere entlang der Längsachse LA des Filterelements 12. Die pneumatischen Antriebe für das Sperrteil 40 und das Ventil 58 lassen sich auch durch einen elektrischen Stellmotor bzw. eine elektrisch betätigbare Magneteinrichtung ersetzen.

Das kombinierte Volumen, gebildet aus dem Inneren des Filterelements 12 und der Rückspülleitung 56 ist derart groß bemessen, dass durch ein zeitlich rasches Verfahren des Sperrteils 40 der Drucksteuereinrichtung 36 in die Sperrstellung ein Druckschlag am Filterelement 12 zum Bewirken der Rückspülung erzeugt werden kann. Die Filtervorrichtung ist als Teil eines Hydrauliksystems 64 mit seiner Fluid-Anschlussstelle 18 für die Abgabe des Filtrats an einen Tank T angeschlossen, der als Speichereinrichtung für weiter an den Tank T angeschlossene Hydraulikkomponenten, wie beispielsweise bewegbare Maschinenteile, dient, die weiter aus dem Tank T mit Fluid versorgt werden kann, selbst wenn die Filtervorrichtung sich im Rückspülmodus befindet. Vorteilhaft ist dabei zwischen den Tank T und die Filtervorrichtung ein Ventil (nicht dargestellt) geschaltet, das für einen sinnfälligen Betrieb mit der Drucksteuereinrichtung zusammenwirkt und jedenfalls im Rahmen des Rückspülvorgangs gleichfalls geschlossen wird, um dergestalt ein ungewolltes Nachsaugen von Luft oder Rückständen aus dem Tank T zu vermeiden. Auch lässt sich dergestalt über das dahingehend tank- oder vorrichtungsseitig angeordnete Ventil die Rückspülmenge auf der Filtratseite der Filtervorrichtung vorgeben, so dass genau portionierbare Rückspülmengen (Pakete) mit möglichst geringem Eintragsvolumen der Filtervorrichtung zur Verfügung stehen, die sich dann entsprechend, trotz ihrer teilweise hohen Viskosität, für den Rückspülvorgang zeitnah und mit ihrem gesamten Volumen stark beschleunigen lassen.

Im Filtrationsbetrieb strömt das Unfiltrat an der zugehörigen Fluid-Anschlussstelle 16 in das Kopfteil 20 der Filtervorrichtung 10 ein und wird an der Umlenkung 26 in Richtung des Inneren des Filterelements 12 umgelenkt. Das Filterelement 12 wird von innen nach außen vom Fluid durchströmt, wobei Verunreinigungen an der Innenseite 28 des Filterelements 12 aufgefangen werden. Auf der Außenseite 30 des Filterelements 12 ist die Filtratseite 32 gebildet, die über eine entsprechende Öffnung 66 im Kopfteil 20 mit der Fluid-Anschlussstelle 18 für das Filtrat in Verbindung ist.

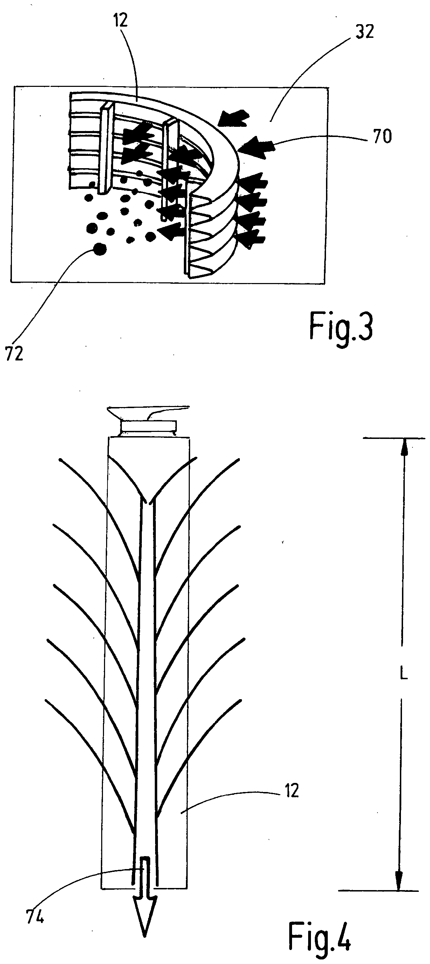

Bei dem erfindungsgemäßen Verfahren zur Rückspülung des Filterelements 12 wird das Rückspülventil 58 an der Unterseite 68 der Filtervorrichtung geöffnet, um eine fluidführende Verbindung vom Inneren 44 des Filterelements 12 zur Rückspülleitung 56 freizugeben. Auf diese Weise kann noch Unfiltrat durch das Filterelement 12 in die Rückspülleitung 56 entlang der hierdurch gebildeten Falllinie einströmen, um in axialer Richtung beschleunigt zumindest einen Teil der Partikelverschmutzungen 72 von der Innenwand des Filterelements 12 abzureinigen. Um die weitere Rückspülung des Filterelements 12 auszulösen, wird sodann das Sperrteil 40 der Drucksteuereinrichtung 36 in seine Sperrstellung verfahren und ein Strömungsabriss des Fluidstroms im Inneren des Filterelements 12 derart erzeugt, dass eine Sogwirkung entsteht, die Filtrat 70 aus dem Filtratraum 32 von außen nach innen durch das Filterelement 12 radial saugt, um dabei die noch verbliebenen Partikelverunreinigungen 72 vom Filterelement 12 abzulösen (siehe hierzu auch die Prinzipdarstellung nach der Fig. 3).

Die dahingehende Fig. 3 zeigt dabei einen Ausschnitt eines Spaltsiebrohres, aus dem das Filterelement 12 im Wesentlichen gebildet ist. Entlang von konisch aufeinander zugewandten, axial angeordneten Längsstäben und mit diesen fest verbunden ist ein Draht "endlos" gewickelt, dessen konischer Querschnittsverlauf nach außen zur Filtratseite 32 hin sich verjüngt, um dergestalt im Filtrationsbetrieb abströmseitig einen geringen Widerstand für das Fluid zu bilden und anströmseitig sich verbreiternd mit der jeweils benachbart sich anschließenden Drahtwindung verengte Durchtrittsspalte zu bilden, die die Partikelverschmutzungen 72 vom Durchtritt auf die Reinseite der Filtervorrichtung abhalten. Beim Rückspülvorgang hingegen, wie er in der Fig. 3 prinzipiell dargestellt ist, bilden die benachbart zueinander angeordneten Drahtwindungen mit ihren nach außen hin gerichteten konischen Querschnittsverjüngungen insoweit einen konisch nach außen hin sich verbreiternden Einlauftrichter aus, der eine beschleunigte Führung des Fluids in Richtung der freien Spaltquerschnitte erlaubt, um derart die dort im Rahmen der zeitlich vorangehenden Filtration angesammelten Partikelverschmutzungen 72 in Richtung des Inneren 44 des Filterelements 12 für den beschriebenen Austragvorgang aus der Filtervorrichtung mit dem Filterelement 12 bodenseitig auszubringen.

Während der Rückspülung stellt sich insbesondere aufgrund des konischen Spaltsiebrohraufbaus grundsätzlich ein iso-kinetischer Fluid-Strömungsverlauf 74 im Inneren 44 des konischen Filterelements 12 in Richtung auf das Rückspülventil 58 ein, der durch die in Fig. 4 gezeigten Strömungspfeile veranschaulicht ist. Aufgrund des dahingehenden iso-kinetischen Strömungsverlaufs 74 hat das rückgespülte Filtrat im Inneren des Filterelements 12 über dessen Länge l in etwa die gleiche Strömungsenergie, wobei die Strömungsgeschwindigkeit selbst aufgrund der beschriebenen Beschleunigungseffekte nach unten hin in Richtung des geöffneten Rückspülventils 58 und der daran angeschlossenen falllinienartigen Rückspülleitung 56 noch weiter anwachsen kann. Zur Beendigung des Rückspülvorgangs wird jedenfalls das Sperrteil 40 wieder in seine in der Fig.2 gezeigte Offenstellung OS verfahren und das Innere 44 des Filterelements 12 mit Unfiltrat kurzzeitig nachgespült, um etwaig verbliebene Partikelverschmutzungen 72 aus dem Inneren 44 des Filterelements 12 "auszuwaschen". Abschließend wird das Spülventil 58 wieder geschlossen, um die Filtervorrichtung 10 in einen Zustand zu versetzen, in dem der normale Filterbetrieb wieder aufgenommen werden kann.

Es hat sich in diesem Zusammenhang als besonders vorteilhaft erwiesen, wenn das Sperrteil 40 für eine Rückspülung des Filterelements 12 maximal 2 Sekunden, bevorzugt maximal 1 Sekunde, weiter bevorzugt maximal 0,5 Sekunden in der Sperrstellung verbleibt. Auf diese Weise kann der Rückspüleffekt zusätzlich verstärkt werden.

Die erfindungsgemäße Filtervorrichtung 10 weist nur ein einziges Filterelement 12 auf und ist bereits deshalb sehr kompakt und bauraumsparend sowie in kostengünstig zu realisierender Weise ausgebildet. Aufgrund des kompakten Aufbaus der erfindungsgemäßen Ein-Filterelementlösung ist es möglich, diese innerhalb beengter Platzverhältnisse und auch bei bereits aufgestellten Maschinenanordnungen, wie beispielsweise Werkzeugmaschinen, nachzurüsten. Insbesondere die spanabhebende Bearbeitung von Werkstücken bringt regelmäßig eine starke partikuläre Verunreinigung 72 von Schmier-, Kühl- und Hydraulikflüssigkeiten mit sich. Diese können mit der Filtervorrichtung 10 zuverlässig abgefiltert werden, wobei das Filterelement 12 aufgrund von zeitgesteuerten oder bedarfsgesteuerten Rückspülungen eine besonders lange Standzeit für den eigentlichen Filterbetrieb aufweist. Die Abscheiderate ist aufgrund der Verwendung von bewährten, robusten Filterelementtechnologien sehr hoch. Weiterhin ist kein besonders hoher Fluiddruck an der Fluid-Anschlussstelle 16 für das Unfiltrat erforderlich, um das Fluid zuverlässig filtrieren und eine Rückspülung auslösen zu können. Es ist lediglich ein Eintrittsdruck von minimal 0,7 bar (= 70 kPa) erforderlich. Der Druckverlust in der Filtervorrichtung 10 beträgt in der Regel ca. 0,5 bar (= 50 kPa). Ein weiterer Vorteil ist darin zu sehen, dass aufgrund der großen Querschnitte der fluidführenden Wege 24, 56, 62 in der Filtervorrichtung 10 das Risiko einer ungewollten Verblockung für das Filterelement 12 in jedem Betriebszustand der Filtervorrichtung minimiert ist.

Das Fluidvolumen, welches durch das Filterelement 12 auf der Unfiltratseite umschlossen wird, beträgt etwa 0,3 bis 0,6 Liter, vorzugsweise etwa 0,4 Liter. Das Volumen ausschließlich auf der Filtratseite beträgt innerhalb des Filtergehäuses 14 etwa 1 bis 4 Liter, vorzugsweise etwa 2 Liter. Das bevorzugte Volumenverhältnis von Filtergehäuse 14 zu Filterelement 12 beträgt demgemäß etwa 5:1; es sind aber auch Verhältniswerte zwischen 2:1 bis 7:1 denkbar. Das Fluidvolumen im Zulaufstutzen 16 sowie im Ablaufbereich zwischen dem Ausgang des Filterelementes 12 und dem Ventil 58 und insoweit auf der Unfiltratseite beträgt ca. 0,1 bis 0,4 Liter, vorzugsweise etwa 0,2 Liter. Das Fluidvolumen des Ausgangsstutzens 18 auf der Filtratseite beträgt ca. 0,1 bis 0,4 Liter, vorzugsweise etwa 0,23 Liter. Durch das Volumenverhältnis von etwa 5:1 zwischen Filtergehäuse 14 und Filterelement 12 stellten sich auch bei hochviskosen Fluiden die angesprochenen Selbstabreinigungsvorgänge am Filterelement 12 bei der Rückspülung ein.

Zur Ermittlung des Volumens innerhalb des Filtergehäuses 14 auf der Filtratseite wird das mögliche Fluid-Gesamtvolumen innerhalb des Filtergehäuses 14 betrachtet abzüglich der Fluidmenge, die von dem Filterelement 12 umfasst ist.

## Patentansprüche

1. Filtervorrichtung mit einem Filterelement (12), das in einem Filtergehäuse (14) mit Fluid-Anschlussstellen (16, 18) für Unfiltrat und Filtrat aufgenommen ist und das für eine Filtration des Unfiltrats oder für eine Rückspülung zum Abreinigen von Partikelverschmutzungen (72) in beiden Richtungen durchströmbar ist, und mit einer Drucksteuereinrichtung (36), mit der eine Nachsaugwirkung am rückzuspülenden Filterelement (12) zur Verbesserung der Abreinigung von Partikelverschmutzungen (72) erzeugbar ist, wobei die Filtervorrichtung (10) als Ein-Filterelementlösung ausgebildet ist und dass in einem vorgebbaren Wechsel dieses einzige Filterelement (12) zur Filtration einsetzbar oder unter Einsatz der Drucksteuereinrichtung (36) rückspülbar ist, wobei die Fluid-Anschlussstellen (16, 18) für Unfiltrat und Filtrat in einem Kopfteil (20) des Filtergehäuses (14) angeordnet und über das Filterelement (12) miteinander verbunden sind, wobei ein erster fluidführender Weg (24) zwischen der Unfiltrat-Anschlussstelle (16) und einer Eingangsseite (38) des Filterelements (12) von einem verfahrbaren Sperrteil (40) der Drucksteuereinrichtung (36) zumindest teilweise absperrbar ist, und wobei der erste fluidführende Weg (24) im Kopfteil (20) an einer Umlenkung (26) winklig verläuft, **dadurch gekennzeichnet, dass** das Sperrteil (40) an der Umlenkung (26) aus einer freigebenden Offenstellung (OS) heraus in Richtung seiner Sperrstellung entlang einer Führung (46) bewegbar ist, welche die Fluid-Anschlussstellen (16, 18) von Unfiltrat und Filtrat voneinander separiert.

2. Filtervorrichtung nach Anspruch 1, **dadurch gekennzeichnet, dass** in der teilabgesperrten Stellung das Sperrteil (40) mit seinem Ventilsitz (42) eine Düse bildet, durch welche die Fluidströmung des Unfiltrats in Richtung des Inneren (44) des Filterelements (12) beschleunigbar ist.

3. Filtervorrichtung nach Anspruch 1 oder 2, **dadurch gekennzeichnet, dass** der erste fluidführende Weg (24) im Kopfteil (20) an einer Umlenkung (26) rechtwinklig verläuft.

4. Filtervorrichtung nach einem der vorstehenden Ansprüche, **dadurch gekennzeichnet, dass** sich das Filterelement (12) zwischen zwei fluidführenden Aufnahmen (52, 54) innerhalb des Filtergehäuses (14) erstreckt und in diese Aufnahmen (52, 54) übergeht, von denen die eine an den ersten fluidführenden Weg (24) und die andere an einen zweiten fluidführenden Weg (56) in Form einer Rückspülleitung (56) angeschlossen ist, der aus dem Filtergehäuse (14) herausführt und der von einem Rückspülventil (58), insbesondere einem 2/2-Wegeventil, ansteuerbar ist.

5. Filtervorrichtung nach Anspruch 4, **dadurch gekennzeichnet, dass** ein dritter fluidführender Weg (62) zwischen der Drucksteuereinrichtung (36) und dem Rückspülventil (58) geradlinig, insbesondere entlang einer Längsachse (LA) des Filterelements (12), verläuft.

6. Filtervorrichtung nach Anspruch 4 oder 5, **dadurch gekennzeichnet, dass** das kombinierte Volumen, gebildet aus dem Inneren (44) des Filterelements (12) und der Rückspülleitung (56), derart groß bemessen ist, dass durch das Verfahren des Sperrteils (40) der Drucksteuereinrichtung (36) in die Sperrstellung ein Druckschlag am Filterelement (12) zum Bewirken der Rückspülung erzeugbar ist.

7. Filtervorrichtung nach einem der vorstehenden Ansprüche, **dadurch gekennzeichnet, dass** das Filterelement (12) konisch, vorzugsweise in Form eines Spaltsiebrohrs, ausgebildet und in einem topfförmig ausgebildeten Aufnahmeteil (22) des Filtergehäuses (14) derart aufgenommen ist, dass sich mit zunehmender Verjüngung des Filterelements (12) ein im Aufnahmeteil (22) gebildeter, das Filterelement (12) umgebender Filtratraum (32) verbreitert.

8. Filtervorrichtung nach Anspruch 7, **dadurch gekennzeichnet, dass** sich während der Rückspülung ein iso-kinetischer Strömungsverlauf (74) im Inneren des konischen Filterelements (12) in Richtung des Rückspülventils (58) einstellt.

9. Filtervorrichtung nach einem der vorstehenden Ansprüche, **dadurch gekennzeichnet, dass** die Drucksteuereinrichtung (36) einen Antrieb (48), vorzugsweise in Form eines pneumatisch ansteuerbaren Arbeitszylinders, aufweist und/oder dass das Sperrteil (40) der Drucksteuereinrichtung (36) platten- oder tellerförmig ausgebildet ist.

10. Hydrauliksystem mit einer Filtervorrichtung nach einem der vorstehenden Ansprüche, wobei an die Fluid-Anschlussstelle (18) der Filtervorrichtung für das Filtrat ein Tank (T) angeschlossen ist.

11. Verfahren zum Rückspülen eines Filterelements (12) einer Filtervorrichtung nach einem der Ansprüche 4 bis 9, mit den Schritten:

a) Öffnen des Rückspülventils (58) zum Freigeben einer fluidführenden Verbindung vom Inneren des Filterelements (12) zur Rückspülleitung (56);
b) Fließen lassen des Unfiltrats durch das Filterelement (12) und in die Rückspülleitung (56);
c) Verfahren des Sperrteils (40) der Drucksteuereinrichtung (36) in die Sperrstellung und damit Erzeugen eines Strömungsabrisses des Fluidstroms derart, dass eine Sogwirkung entsteht, die Filtrat (70) aus dem Filtratraum (32) von außen nach innen durch das Filterelement (12) saugt;
d) Verfahren des Sperrteils (40) in die Offenstellung (OS) zum Spülen des Inneren des Filterelements (12) mit Unfiltrat; und
e) Schließen des Rückspülventils (58),

**dadurch gekennzeichnet, dass** das Sperrteil (40) maximal 2 Sekunden in der Sperrstellung verbleibt.

12. Verfahren nach Anspruch 11, **dadurch gekennzeichnet, dass** das Sperrteil (40) maximal 1 Sekunde, bevorzugt maximal 0,5 Sekunden, in der Sperrstellung verbleibt.

**Claims**

1. A filter device with a filter element (12), which is accommodated in a filter housing (14) with fluid connection points (16, 18) for non-filtrate and filtrate and which element can be passed through in both directions for filtering the non-filtrate or for backwashing to clean particle contaminations (72), and which filter device also comprises a pressure-control device (36) with which a post-suctioning effect can be generated on the filter element (12) to be backwashed to improve the cleaning of particle contaminations (72), wherein the filter device (10) is designed as a one filter-element solution and that, in a predetermined change, this single filter element (12) can be used for filtering or can be backwashed using the pressure-control device (36), wherein the fluid connection points (16, 18) for non-filtrate and filtrate are arranged in a head piece (20) of the filter housing (14) and are connected to one another via the filter element (12), wherein a first fluid-conveying path (24) can be at least partially blocked between the non-filtrate connection point (16) and an input side (38) of the filter element (12) by a displaceable blocking part (40) of the pressure-control device (36), and wherein the first fluid-conveying path (24) extends through an angle at a diversion (26) in the head piece (20), **characterised in that** the blocking part (40) can be moved at the diversion (26) from an open position (OS) in direction of its closed position along a guide (46) which separates the fluid connection points (16, 18) for the non-filtrate and filtrate connection point from one another.

2. The filter device according to claim 1, **characterised in that**, in partial shut-off position, the blocking part (40) forms, with its valve seat (42), a nozzle through which the fluid flow of non-filtrate can be accelerated inside (44) the filter element (12).

3. The filter device according to claim 1 or 2, **characterised in that** the first fluid-conveying path (24) extends through an angle at a diversion (26) in the head piece (20).

4. The filter device according to one of the preceding claims, **characterised in that** the filter element (12) extends between two fluid-conveying receptacles (52, 54) inside the filter housing (14) and crosses over into these receptacles (52, 54), of which the one is connected to the first fluid-conveying path (24) and the other is connected to a second fluid-conveying path (56) in the form of a backwash line (56) which extends out of the filter housing (14) and can be activated by a backwash valve (58), in particular a 2/2-way valve.

5. The filter device according to claim 4, **characterised in that** a third fluid-conveying path (62) travels between the pressure-control device (36) and the backwash valve (58) in a straight line, in particular along a longitudinal axis (LA) of the filter element (12).

6. The filter device according to claim 4 or 5, **characterised in that** the combined volume, formed of the interior (44) of the filter element (12) and of the backwash line (56), is sufficiently large that a pressure shock can be generated on the filter element (12) to effect backwashing by displacing the blocking part (40) of the pressure-control device (36) into the closed position.

7. The filter device according to one of the preceding claims, **characterised in that** the filter element (12) is designed conical, preferably in the form of a slotted sieve tube and is received in a pot-shaped receiving part (22) of the filter housing (14) such that, as the filter element (12) continues to taper, a filtrate-receiving compartment (32) formed in the receiving part (22) and surrounding the filter element (12) widens.

8. The filter device according to claim 7, **characterised in that** an isokinetic flow course (74) inside the conical filter element (12) is adjusted in direction of the backwash valve (58) during backwashing.

9. The filter device according to one of the preceding claims, **characterised in that** the pressure-control device (36) has a drive (48), preferably in the form of a pneumatically-activatable working cylinder, and/or the blocking part (40) of the pressure-control device (36) is plate-shaped or saucer-shaped.

10. A hydraulic system with a filter device according to one of the preceding claims, wherein a tank (T) is connected to the filter connection point (18) of the filter device for the filtrate.

11. A method for backwashing a filter element (12) of a filter device according to one of claims 4 to 9, with the steps:

    a) opening the backwash valve (58) to open a fluid communication inside the filter element (12) to the backwash line (56);

b) allowing non-filtrate to flow through the filter element (12) and into the backwash line (56);

c) displacing the blocking part (40) of the pressure-control device (36) into the blocking position and thus stalling the fluid flow such that a suction effect is produced which sucks filtrate (70) from the filtrate compartment (32) externally into the inside by the filter element (12);

d) displacing the blocking part (40) into the opened position (OS) to flush the inside of the filter element (12) with non-filtrate; and

e) closing the backwash valve (58),

**characterised in that** the blocking part (40) remains in the blocking position for a maximum of 2 seconds.

12. The method according to claim 11, **characterised in that** the blocking part (40) remains in the blocking position for a maximum of 1 second, preferably 0.5 seconds.


## Revendications

1. Installation de filtration, comprenant un élément (12) de filtre, qui est reçu dans une enveloppe (14) de filtre, ayant des points (16, 18) de raccord de fluide pour du non filtrat et du filtrat, et qui peut être traversé dans les deux sens pour une filtration du non filtrat ou pour un lavage en retour, en vue de nettoyer des encrassements (72) par des particules, et comprenant un dispositif (36) de réglage de la pression, par lequel un effet de post aspiration, sur l'élément (12) de filtre lavé en retour, peut être produit pour améliorer le nettoyage d'encrassements (12) par des particules, l'installation (10) de filtration étant constituée sous la forme d'une solution à un seul élément de filtre et en ce que, dans un changement pouvant être prescrit, cet élément (12) de filtre unique peut être utilisé pour la filtration ou peut être lavé en retour en utilisant le dispositif (36) de réglage de la pression, les points (16, 18) de raccord de fluide pour du non filtrat et du filtrat étant disposés dans une partie (20) de tête de l'enveloppe (14) du filtre et pouvant communiquer entre eux par l'élément (12) de filtre, un premier chemin (24) fluidique, entre le point (16) de raccord du non filtrat et un côté (38) d'entrée de l'élément (12) de filtre, pouvant être barré, au moins en partie, par une partie (24) de barrage déplaçable du dispositif (36) de réglage de la pression et le premier chemin (24) fluidique s'étendant dans la partie (20) de tête, en faisant un angle à un coude (26), **caractérisée en ce que** la partie (40) de barrage au coude (26) peut être déplacée à partir d'une position (OS) d'ouverture de dégagement, en direction de sa position de barrage, le long d'un guidage (46), qui sépare l'un de l'autre les points (16, 18) de raccord de fluide du non filtrat et du filtrat.

2. Installation de filtration suivant la revendication 1, **caractérisée en ce que**, dans la position de barrage partiel, la partie (40) de barrage forme, par son siège (42) de soupape, une buse, par laquelle l'écoulement de fluide du non filtrat en direction de l'intérieur (44) de l'élément (12) de filtre peut être accéléré.

3. Installation de filtration suivant la revendication 1 ou 2, **caractérisée en ce que** le premier chemin (24) fluidique s'étend à angle droit à un coude (26) dans la partie (20) de tête.

4. Installation de filtration suivant l'une des revendications précédentes, **caractérisée en ce que** l'élément (12) de filtre s'étend entre deux logements (52, 54) de conduite de fluide, à l'intérieur de l'enveloppe (14) du filtre, et se transforme en ces logements (52, 54), dont l'un est raccordé au premier chemin (24) fluidique et l'autre à un deuxième chemin (56) fluidique sous la forme d'un conduit (56) de lavage en retour, qui part de l'enveloppe (14) du filtre et qui peut être commandé par une soupape (58) de lavage en retour, notamment par une soupape à 2/2 voies.

5. Installation de filtration suivant la revendication 4, **caractérisée en ce qu'**un troisième chemin (62) fluidique s'étend entre le dispositif (36) de réglage de la pression et la soupape (58) de lavage en retour, en ligne droite, notamment suivant un axe (LA) longitudinal de l'élément (12) de filtre.

6. Installation de filtration suivant la revendication 4 ou 5, **caractérisée en ce que** le volume combiné, formé de l'intérieur (44) de l'élément (12) de filtre et du conduit (56) de lavage en retour, est tel que, lorsque la partie (40) de barrage du dispositif (36) de réglage de la pression vient dans la position de barrage, un coup de bélier peut être produit sur l'élément (12) de filtre pour provoquer le lavage en retour.

7. Installation de filtration suivant l'une des revendications précédentes, **caractérisée en ce que** l'élément (12) de filtre est conique, de préférence sous la forme d'un tube formant tamis à fente et est logé dans une partie (22) en forme de pot de réception de l'enveloppe (14) du filtre, de manière à ce qu'au fur et à mesure qu'augmente le rétrécissement de l'élément (12) de filtre, un espace (32) pour le filtrat, formé dans la partie (22) de logement et entourant l'élément (12) de filtre, s'élargisse.

8. Installation de filtration suivant la revendication 7, **caractérisée en ce que**, pendant le lavage en retour, il s'établit un trajet (74) d'écoulement isocinétique à l'intérieur de l'élément (12) de filtre conique, en direction de la soupape (58) de lavage en retour.

9. Installation de filtration suivant l'une des revendications précédentes, **caractérisée en ce que** le dispositif (36) de réglage de la pression a un entraînement (48), de préférence sous la forme d'un vérin de travail à commande pneumatique et/ou **en ce que** la partie (40) de barrage du dispositif (36) de réglage de la pression est constituée sous la forme d'une plaque ou d'un plateau.

10. Système hydraulique ayant une installation de filtration suivant l'une des revendications précédentes, dans lequel un réservoir (T) est raccordé au point (18) de raccord de fluide de l'installation de filtration pour le filtrat.

11. Procédé de lavage en retour d'un élément (12) de filtre d'une installation de filtration suivant l'une de revendications 4 à 9, comprenant les stades :

   a) On ouvre la soupape (58) de lavage en retour pour dégager une liaison fluidique de l'intérieur de l'élément (12) de filtre au conduit (56) de lavage en retour ;
   b) on fait s'écouler le non filtrat à travers l'élément (12) de filtre et dans le conduit (56) de lavage en retour ;
   c) on met la partie (40) de barrage du dispositif (36) de réglage de la pression dans la position de barrage et on produit ainsi un détachement du courant de fluide, de manière à créer un effet d'aspiration, qui aspire le filtrat (70) de l'espace (32) pour le filtrat, de l'extérieur vers l'intérieur, à travers l'élément (12) de filtre ;
   d) on met la partie (40) de barrage dans la position (OS) d'ouverture pour laver en retour par du non filtrat l'intérieur de l'élément (12) de filtre ; et
   e) on ferme la soupape (58) de lavage en retour,

   **caractérisé en ce que** la partie (40) de barrage reste dans la position de barrage pendant deux secondes au maximum.

12. Procédé suivant la revendication 11, **caractérisé en ce que** la partie (40) de barrage reste dans la position de barrage pendant 1 seconde au maximum, de préférence pendant 0,5 seconde au maximum.

Fig.1

Fig.2

Fig.3

Fig.4

**IN DER BESCHREIBUNG AUFGEFÜHRTE DOKUMENTE**

**In der Beschreibung aufgeführte Patentdokumente**

- WO 2009062644 A1
- DE 2754594 A1
- DE 102007054737 A1
- DE 3247440 A1
- FR 2513537